# EUROPÄISCHE PATENTSCHRIFT

(11) **EP 3 862 659 B1**
(45) Veröffentlichungstag und Bekanntmachung des Hinweises auf die Patenterteilung: **24.07.2024**
(21) Anmeldenummer: 21156439.8
(22) Anmeldetag: 10.02.2021
(51) Int. Cl.: F25B 31/00, F01M 13/04

(54) **ANORDNUNG EINES VENTILS UND EINES VENTILBLOCKS ZUM ANSCHLUSS AN EINEN ÖLABSCHEIDER EINES KÄLTEKREISLAUFS**
ARRANGEMENT OF A VALVE AND A VALVE BLOCK FOR CONNECTION TO AN OIL SEPARATOR OF A REFRIGERATION CIRCUIT
AGENCEMENT D'UNE SOUPAPE ET D'UN BLOC DE SOUPAPE DESTINÉ AU RACCORDEMENT À UN SÉPARATEUR D'HUILE D'UN CIRCUIT DE RÉFRIGÉRATION

(30) Priorität: 10.02.2020 DE 202020100691 U
(43) Veröffentlichungstag der Anmeldung: 11.08.2021
(73) Patentinhaber: TEKO Gesellschaft für Kältetechnik mbH, 63674 Altenstadt (DE)
(72) Erfinder: Bachmann, Ulrich, 63628 Bad Soden-Salmünster (DE)
(74) Vertreter: 2K Patentanwälte Blasberg Kewitz & Reichel

(56) Entgegenhaltungen:
- EP-A1- 2 881 682
- EP-A2- 2 505 841
- CN-U- 205 806 057

## Beschreibung

Die Erfindung betrifft eine Anordnung eines Ventils und eines Ventilblocks zum Anschluss an einen Ölabscheider eines Kältekreislaufs. Ventilblöcke sind dem Fachmann beispielsweise aus der CN 205 806 057 U, der EP 2 881 682 A1 und der EP 2 505 841 A2 bekannt. CN 205 806 057 U offenbart eine Anordnung eines Ventils und eines Ventilblocks gemäß dem Oberbegriff des Anspruchs 1.

Ein Kältekreislauf ist ein System, das dazu dient, eine Einrichtung auf ein gewünschtes Maß abzukühlen, beispielsweise eine Kühltruhe für Lebensmittel. Ein Kältemittel, das in dem geschlossenen Kreislauf bewegt wird, erfährt nacheinander verschiedene Aggregatzustandsänderungen: Das gasförmige Kältemittel wird zunächst durch einen Verdichter komprimiert. Im folgenden Wärmeüberträger kondensiert es unter Wärmeabgabe. Anschließend wird das flüssige Kältemittel aufgrund der Druckänderung über ein Drosselorgan, zum Beispiel ein Expansionsventil oder ein Kapillarrohr, entspannt. Im nachgeschalteten zweiten Wärmeüberträger (Verdampfer) verdampft das Kältemittel unter Wärmeaufnahme bei niedriger Temperatur (Siedekühlung). Der Kreislauf kann nun von vorne beginnen. Der Prozess muss von außen durch Zufuhr von mechanischer Arbeit (Antriebsleistung) über den Verdichter in Gang gehalten werden.

Im Verdichter wird Öl als Schmiermittel verwendet. Baubedingt gelangt dabei stets ein Teil des Öls in das austretende verdichtete Kältemittel. Ausgangsseitig ist dem Verdichter daher in der Regel ein Ölabscheider nachgeschaltet, der z.B. als Prallabscheider ausgebildet sein kann, und in dem das Öl wieder aus dem Kältemittel entfernt wird. Das abgeschiedene Öl wird dabei nicht verworfen, sondern über einen separaten Ölkreislauf gefiltert und dem Verdichter wieder zugeführt. Hierfür ist dem Ölabscheider im Ölkreislauf in der Regel ein Ventil, ein Ölfilter sowie ein Schauglas zur visuellen Kontrolle des Ölflusses nachgelagert. Diese drei Komponenten sind bislang typischerweise einzeln und aufeinanderfolgend in die Verbundanlage eingelötet.

Problematisch ist hierbei, dass diese Konstruktion vergleichsweise viel Platz innerhalb der Anlagenkonstruktion benötigt. Der Aufbau wird dadurch auch wenig wartungsfreundlich.

Es ist daher Aufgabe der Erfindung, das Volumen der dem Ölabscheider nachgeschalteten Bauteile innerhalb eines Kältekreislaufs zu reduzieren und den Aufbau insgesamt wartungsfreundlicher zu gestalten.

Diese Aufgabe wird erfindungsgemäß gelöst durch eine Anordnung eines Ventils und eines Ventilblocks gemäß Anspruch 1 zum Anschluss an einen Ölsammler eines Kältekreislaufs, umfassend einen Vollkörper mit einer Eintrittsöffnung und einer Austrittsöffnung, sowie einer ersten und einer zweiten Anschlussöffnung für ein Ventil, wobei der Vollkörper einen ersten Ölkanal aufweist, der von der Eintrittsöffnung zur ersten Anschlussöffnung führt, und einen zweiten Ölkanal aufweist, der von der Austrittsöffnung zur zweiten Anschlussöffnung führt, wobei auf den Anschlussöffnungen ein Ventil derart angeordnet ist, dass es die beiden Anschlussöffnungen verbindet und den Durchfluß durch die Verbindung steuert, wobei der Vollkörper eine Filteröffnung aufweist, die den ersten Ölkanal schneidet und in die ein Filter derart eingesetzt ist, dass er das durch den ersten Ölkanal fließende Öl filtert. Weiterhin weist die Filteröffnung ein Innengewinde auf, in das der Filter eingeschraubt ist.

Die Erfindung geht dabei von der Überlegung aus, dass der Platzverbrauch reduziert werden könnte, wenn die unterschiedlichen Bauteile, insbesondere das Ventil und der Filter, innerhalb eines einzigen Bauteilblocks integriert werden könnten. Dieser Ventilblock ist besonders einfach als Vollkörper, d.h. als massives Bauteil ausgeführt, in den die benötigten Ölkanäle eingebracht werden können. Die jeweiligen Bauteile, d.h. mindestens Filter und Ventil können dann am oder im Block angeordnet werden, und durch entsprechende Einbringung der Ölkanäle können die jeweils benötigten Verbindungen erzeugt werden. Durch das Innengewinde in der Filteröffnung kann der Filter besonders einfach getauscht werden.

Vorteilhafterweise ist der Vollkörper aus Metall gebildet, welches sich hinsichtlich der Langzeitstabilität und auch der Bearbeitbarkeit besonders eignet.

Besonders vorteilhaft sind die Ölkanäle und/oder die Filteröffnung jeweils aus einer Anzahl von Bohrungen in den Vollkörper gebildet. Dabei können die Kanäle prinzipiell durch einen rotierenden Bohrer, aber auch mittels Laserbohren oder Bohrerodieren eingebracht werden.

Vorteilhafterweise trifft die Filteröffnung in einem Winkel zwischen 30 und 60 Grad auf den ersten Ölkanal.

Weiterhin weisen vorteilhafterweise die Eintritts- und/oder die Austrittsöffnung jeweils ein Innengewinde auf, in das jeweils ein Anschlussstück eingeschraubt ist. Hierdurch wird eine flexible und einfache Verbindung mit dem übrigen Ölkreislauf ermöglicht.

In vorteilhafter Ausgestaltung sind die Eintritts- und Austrittsöffnungen in einer ersten Oberfläche des Vollkörpers angeordnet, die Anschlussöffnungen in einer zweiten Oberfläche angeordnet, und die Ölkanäle bestehen jeweils aus zwei sich in die erste und zweite Oberfläche eingebrachten Bohrungen, die sich im Inneren des Vollkörpers treffen.

Die erste und die zweite Oberfläche sind dabei vorteilhafterweise rechtwinklig zueinander.

In weiterer vorteilhafter Ausgestaltung weist der Vollkörper eine Schauglasöffnung auf, die den zweiten Ölkanal schneidet und auf die ein Schauglas verschließend aufgesetzt ist. Hierdurch wird innerhalb desselben Blocks eine Sichtprüfung des Ölflusses ermöglicht.

Auch die Schauglasöffnung ist besondere vorteilhaft aus einer Bohrung gebildet.

Weiterhin weist die Schauglasöffnung vorteilhafterweise ein Innengewinde auf, in das das Schauglas eingeschraubt ist. Hierdurch wird auch das Schauglas austauschbar.

Vorteilhafterweise ist das Ventil als Magnetventil ausgebildet.

Die mit der Erfindung erzielten Vorteile bestehen insbesondere darin, dass durch die Vereinigung der Komponenten Schmutzfilter, Magnetventil und Schauglas in einem Bauteil eine erhebliche Platzeinsparnis innerhalb der Anlagenkonstruktion erreicht wird. Durch die mögliche Einsparung von ca. 80% des bisherigen Volumens wird eine kompaktere Bauform der Kälteaggregate erreicht. Der Aufbau der Anlage wird somit servicefreundlicher.

Zudem wird eine Reduktion der Lötstellen erreicht: Durch den Einzelaufbau der genannten Komponenten ergaben sich bislang pro Komponente zwei Lötstellen. Jede Lötstelle kann eine potentielle Undichte hervorrufen. Durch die Integration im beschriebenen können die Verbindungsstellen und damit potenzielle Undichten von sechs auf zwei reduziert werden (um 66 % reduziert werden).

Zusätzlich besteht bei jedem Lötvorgang an Rohrleitungen mit kleinem Durchmesser (6 mm) die Gefahr, die Verbindung zuzulöten, sodass weniger bis kein Durchfluss des Öls möglich ist. Die neuen zwei Fügestellen können wie oben beschrieben mit Schraubverbindungen verbaut werden. Diese schließen die Problematik des Lötprozesses aus. Der beschriebene Ventilblock optimiert den Fertigungsprozess um ca. 70 Minuten. Der Schmutzfilter des Ventilblockes ist nun wechselbar - das erhöht die Servicefreundlichkeit im Wartungsfall.

Ein Ausführungsbeispiel der Erfindung wird anhand einer Zeichnung näher erläutert. Darin zeigen:
- FIG 1: einen Kältekreislauf,
- FIG 2: eine Schnittzeichnung eines Ventilblocks, und
- FIG 3: eine Draufsicht des Ventilblocks.

Gleiche Teile sind in allen Zeichnungen mit denselben Bezugszeichen versehen.

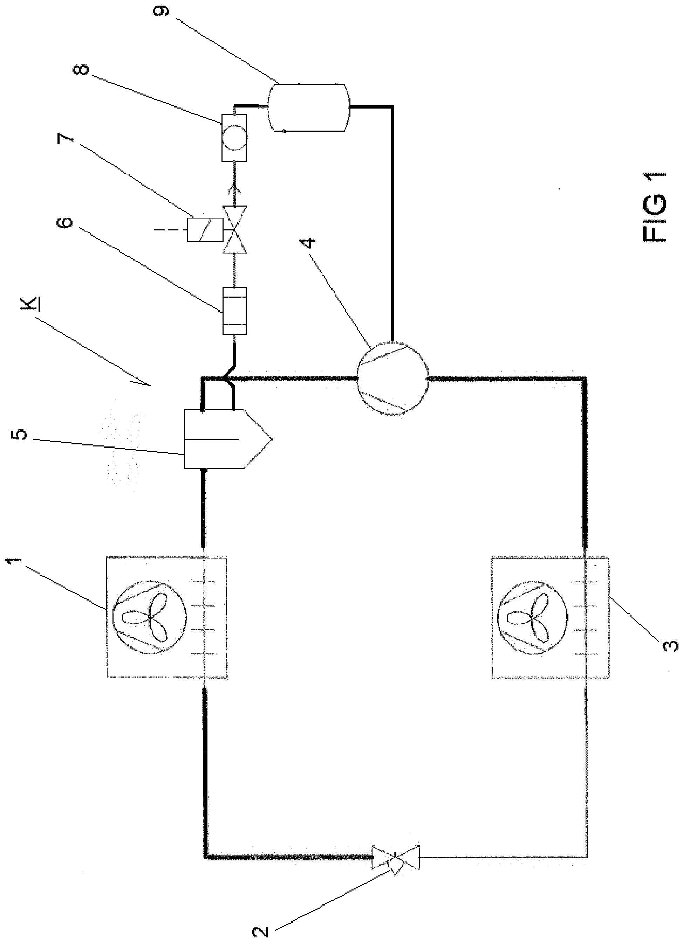

FIG 1 zeigt einen Kältekreislauf K. Der Kältekreislauf K umfasst in Strömungsrichtung des Kältemittels (in der Zeichnung gegen den Uhrzeigersinn) aufeinander folgend einen wärmeabgebenden Wärmeüberträger 1, ein Drosselorgan 2, einen wärmeaufnehmenden Wärmeüberträger 3, einen Verdichter 4 und einen Ölabscheider 5. Der Ölabscheider 5 ist als Prallabscheider ausgebildet und scheidet Öl ab, welches dem Kältemittel im Verdichter 4 beigemischt wurde.

Das abgeschiedene Öl wird über einen Filter 6, ein als Magnetventil ausgebildetes Ventil 7 sowie ein Schauglas 8 in einen Ölbehälter 9 geführt. Von hier wird es dem Verdichter 4 bedarfsweise wieder zugeführt. Der Filter 6 reinigt das Öl der Verbundanlage. Anschließend wird über das Ventil 7 der Ölfluss der Anlage geregelt und über das Schauglas 8 eine Kontrollfunktion des Ölflusses gewährleistet.

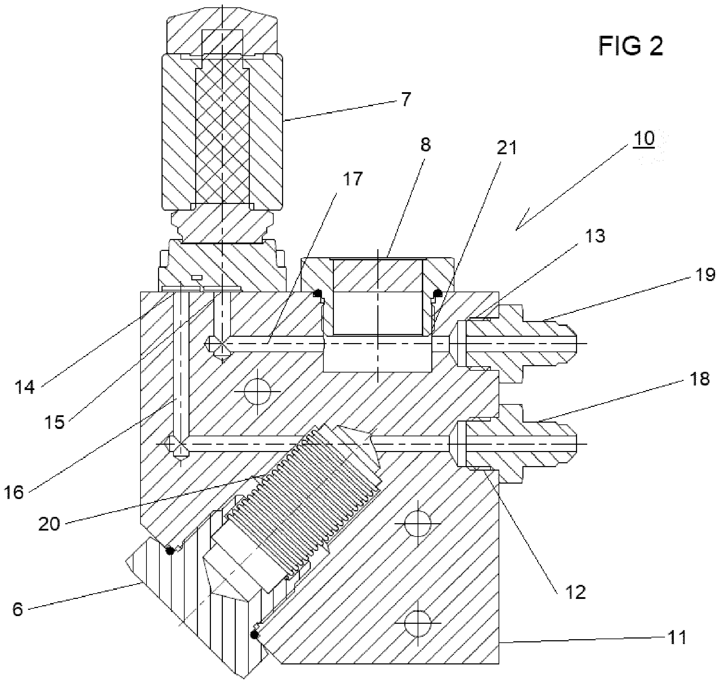

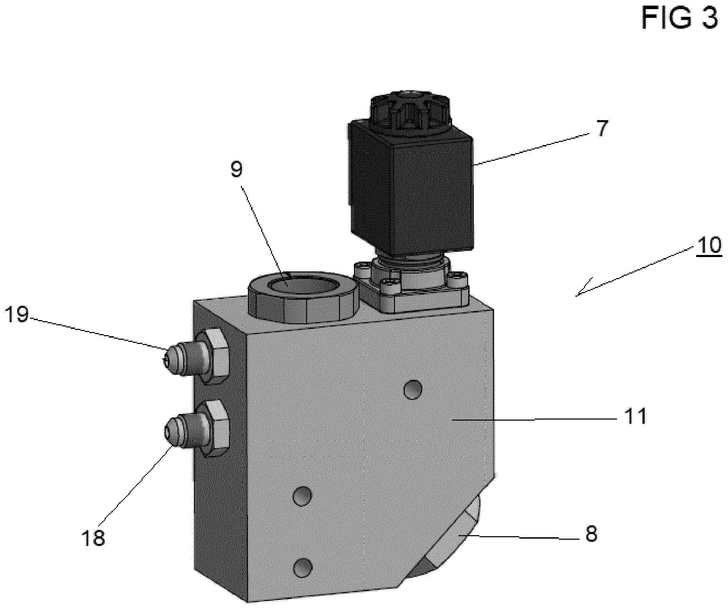

In bisherigen Anlagen wurden Filter 6, Ventil 7 und Schauglas 8 als separate, miteinander verlötete Bauteile ausgebildet. Hierdurch wurde vergleichsweise viel Platz in Anspruch genommen. Daher sind diese Bauteile nun in dem in FIG 2 und 3 gezeigten Ventilblock 10 kombiniert.

Der Ventilblock 10 umfasst zunächst einen massiven metallischen Vollkörper 11. Dieser hat einen im Wesentlichen quadratischen Querschnitt mit einer im 45 Grad-Winkel abgeflachten Ecke. In FIG 2 ist diese abgeflachte Ecke links unten angeordnet, so dass die obere und die rechte Oberfläche, die in einem 90 Grad-Winkel zueinander stehen, der abgeflachten Ecke gegenüber angeordnet sind. Auf der in der FIG 2 rechten Oberfläche sind voneinander beabstandet eine Eintrittsöffnung 12 und eine Austrittsöffnung 13 für das Öl angeordnet. Auf der in FIG 2 oberen Oberfläche sind zwei Anschlussöffnungen 14, 15 angeordnet. Auf der Oberfläche und über den Anschlussöffnungen 14, 15 ist das Ventil 7 angeordnet, welches den Durchfluss von der ersten Anschlussöffnung 14 in die zweite Anschlussöffnung 15 steuert.

Jeweils von der Eintrittsöffnung 12, der Austrittsöffnung 13 und den Anschlussöffnungen 14, 15 ist je eine Bohrung senkrecht zur jeweiligen Oberfläche in das Innere des Vollkörpers 11 eingebracht. Die beschriebenen Öffnungen sind so angeordnet, dass die Bohrung der Eintrittsöffnung 12 auf die Bohrung der ersten Anschlussöffnung 14 trifft, so dass diese Bohrungen einen ersten Ölkanal 16 bilden, der die Eintrittsöffnung 12 mit der ersten Anschlussöffnung 14 verbindet. In gleicher Weise trifft die Bohrung der Austrittsöffnung 13 auf die Bohrung der zweiten Anschlussöffnung 15, so dass diese Bohrungen einen zweiten Ölkanal 17 bilden, der die Austrittsöffnung 13 mit der zweiten Anschlussöffnung 15 verbindet.

Die Eintrittsöffnung 12 und die Austrittsöffnung 13 weisen in einer beschränkten Tiefe gegenüber den Ölkanälen 16, 17 einen etwa doppelten Durchmesser und ein Innengewinde auf. In jedes der Innengewinde ist dabei je ein Anschlussstück 18, 19 geschraubt, welches einen einfachen Anschluss des Ventilblocks 10 im Gesamtsystem erlaubt.

In die Oberfläche der abgeschrägten Ecke ist weiterhin eine im Vergleich zu den Ölkanälen 16, 17 mit etwa vierfachem Durchmesser ausgebildete Filteröffnung 20 eingebohrt. Diese erstreckt sich so tief, dass sie den ersten Ölkanal 16 schneidet. Auch die Filteröffnung 20 ist mit einem Innengewinde versehen. In die Filteröffnung 20 ist der Filter 6 so eingeschraubt, dass er den Ölkanal 16 vollkommen ausfüllt. Das durch den Ölkanal 16 strömende Öl wird somit im Filter 6 gereinigt. Der Filter 6 ist zudem einfach austauschbar.

Schließlich ist in die in FIG 2 obere Oberfläche vom Ventil 7 beabstandet eine Schauglasöffnung 21 eingebohrt. Diese weist in etwa den Durchmesser der Filteröffnung 20 auf und weist ebenfalls ein Innengewinde auf. In das Innengewinde ist das mit einem Außengewinde versehene Schauglas 8 eingeschraubt, so dass es die Schauglasöffnung 21 verschließt. Die Schauglasöffnung 21 ist dabei so tief eingebracht, dass sie den zweiten Ölkanal 17 schneidet. Das durch den zweiten Ölkanal 17 fließende Öl füllt somit die Schauglasöffnung 21 vollständig aus und der Ölfluss kann visuell geprüft werden.

FIG 3 zeigt schließlich eine dreidimensionale Draufsicht des bereits beschriebenen Ventilblocks 10.

### Bezugszeichenliste

- 1: Wärmeüberträger
- 2: Drosselorgan
- 3: Wärmeüberträger
- 4: Verdichter
- 5: Ölabscheider
- 6: Filter
- 7: Ventil
- 8: Schauglas
- 9: Ölbehälter
- 10: Ventilblock
- 11: Vollkörper
- 12: Eintrittsöffnung
- 13: Austrittsöffnung
- 14, 15: Anschlussöffnung
- 16, 17: Ölkanal
- 18, 19: Anschlussstück
- 20: Filteröffnung
- 21: Schauglasöffnung

## Patentansprüche

1. Anordnung eines Ventils und eines Ventilblocks (10) zum Anschluss an einen Ölabscheider (5) eines Kältekreislaufs (K), umfassend einen Vollkörper (11) mit einer Eintrittsöffnung (12) und einer Austrittsöffnung (13), sowie einer ersten und einer zweiten Anschlussöffnung (14, 15) für das Ventil (7),
wobei der Vollkörper (11) einen ersten Ölkanal (16) aufweist, der von der Eintrittsöffnung (12) zur ersten Anschlussöffnung (14) führt, und
einen zweiten Ölkanal (17) aufweist, der von der Austrittsöffnung (13) zur zweiten Anschlussöffnung (15) führt,
wobei auf den Anschlussöffnungen (14, 15) das Ventil (7) derart angeordnet ist, dass es die beiden Anschlussöffnungen (14, 15) verbindet und den Durchfluß durch die Verbindung steuert,
wobei der Vollkörper (11) eine Filteröffnung (20) aufweist, die den ersten Ölkanal (16) schneidet und in die ein Filter (6) derart eingesetzt ist, dass er das durch den ersten Ölkanal (16) fließende Öl filtert, **dadurch gekennzeichnet, dass** die Filteröffnung (20) ein Innengewinde aufweist, in das der Filter (6) eingeschraubt ist.

2. Anordnung eines Ventils und eines Ventilblocks (10) nach Anspruch 1, wobei der Vollkörper (11) aus Metall gebildet ist.

3. Anordnung eines Ventils und eines Ventilblocks (10) nach einem der vorhergehenden Ansprüche, wobei die Ölkanäle (16, 17) und/oder die Filteröffnung (20) jeweils aus einer Anzahl von Bohrungen in den Vollkörper (11) gebildet sind.

4. Anordnung eines Ventils und eines Ventilblocks (10) nach Anspruch 3, bei dem die Filteröffnung (20) in einem Winkel zwischen 30 und 60 Grad auf den ersten Ölkanal (16) trifft.

5. Anordnung eines Ventils und eines Ventilblocks (10) nach einem der vorhergehenden Ansprüche, bei dem die Eintritts- und/oder die Austrittsöffnung (12, 13) jeweils ein Innengewinde aufweisen, in das jeweils ein Anschlussstück (18, 19) eingeschraubt ist.

6. Anordnung eines Ventils und eines Ventilblocks (10) nach einem der vorhergehenden Ansprüche, bei dem die Eintritts- und Austrittsöffnungen (12, 13) in einer ersten Oberfläche des Vollkörpers (11) angeordnet sind, die Anschlussöffnungen (14, 15) in einer zweiten Oberfläche angeordnet sind, und die Ölkanäle (16, 17) jeweils aus zwei sich in die erste und zweite Oberfläche eingebrachten Bohrungen bestehen, die sich im Inneren des Vollkörpers (11) treffen.

7. Anordnung eines Ventils und eines Ventilblocks (10) nach Anspruch 6, bei dem die erste und die zweite Oberfläche rechtwinklig zueinander sind.

8. Anordnung eines Ventils und eines Ventilblocks (10) nach einem der vorhergehenden Ansprüche, bei dem der Vollkörper (11) eine Schauglasöffnung (21) aufweist, die den zweiten Ölkanal (16, 17) schneidet und auf die ein Schauglas (8) verschließend aufgesetzt ist.

9. Anordnung eines Ventils und eines Ventilblocks (10) nach Anspruch 8, bei dem die Schauglasöffnung (21) aus einer Bohrung gebildet ist.

10. Anordnung eines Ventils und eines Ventilblocks (10) nach Anspruch 8 oder 9, bei dem die Schauglasöffnung (21) ein Innengewinde aufweist, in das das Schauglas (8) eingeschraubt ist.

11. Anordnung eines Ventils und eines Ventilblocks (10) nach einem der vorhergehenden Ansprüche, bei dem das Ventil (7) als Magnetventil ausgebildet ist.

## Claims

1. Arrangement of a valve and a valve block (10) for connection to an oil separator (5) of a refrigeration circuit (K), comprising
a solid body (11) with an inlet opening (12) and an outlet opening (13), as well as a first and a second connection opening (14, 15) for the valve (7),
the solid body (11) having a first oil channel (16) which leads from the inlet opening (12) to the first connection opening (14), and having
a second oil channel (17) which leads from the outlet opening (13) to the second connection opening (15), the valve (7) being arranged
on the connection openings (14, 15) in such a way that it connects the two connection openings (14, 15) and controls the flow through the connection,
the solid body (11) having a filter opening (20) which intersects the first oil channel (16) and into which a filter (6) is inserted in such a way that it filters the oil flowing through the first oil channel (16), **characterized in that** the filter opening (20) has an internal thread into which the filter (6) is screwed.

2. Arrangement of a valve and a valve block (10) according to claim 1, wherein the solid body (11) is made of metal.

3. Arrangement of a valve and a valve block (10) according to one of the preceding claims, wherein the oil channels (16, 17) and/or the filter opening (20) are each formed from a number of bores in the solid body (11) .

4. Arrangement of a valve and a valve block (10) according to claim 3, in which the filter opening (20) meets the first oil channel (16) at an angle of between 30 and 60 degrees.

5. Arrangement of a valve and a valve block (10) according to one of the preceding claims, in which the inlet and/or the outlet opening (12, 13) each have an internal thread into which a connecting piece (18, 19) is screwed in each case.

6. Arrangement of a valve and a valve block (10) according to one of the preceding claims, wherein the inlet and outlet openings (12, 13) are arranged in a first surface of the solid body (11), the connection openings (14, 15) are arranged in a second surface, and the oil ducts (16, 17) each consist of two bores formed in the first and second surfaces, which meet in the interior of the solid body (11).

7. An arrangement of a valve and a valve block (10) according to claim 6, wherein the first and second surfaces are perpendicular to each other.

8. Arrangement of a valve and a valve block (10) according to one of the preceding claims, in which the solid body (11) has a sight glass opening (21) which intersects the second oil channel (16, 17) and on which a sight glass (8) is placed in a sealing manner.

9. Arrangement of a valve and a valve block (10) according to claim 8, in which the sight glass opening (21) is formed from a bore.

10. Arrangement of a valve and a valve block (10) according to claim 8 or 9, in which the sight glass opening (21) has an internal thread into which the sight glass (8) is screwed.

11. Arrangement of a valve and a valve block (10) according to one of the preceding claims, in which the valve (7) is designed as a solenoid valve.

## Revendications

1. Agencement d'une soupape et d'un bloc de soupape (10) destiné au raccordement à un séparateur d'huile (5) d'un circuit de réfrigération (K), comprenant
un corps solide (11) avec une ouverture d'entrée (12) et une ouverture de sortie (13), ainsi qu'une première et une deuxième ouverture de connexion (14, 15) pour la soupape (7),
le corps solide (11) a un premier canal d'huile (16) qui va de l'ouverture d'entrée (12) à la première ouverture de connexion (14), et a un second canal d'huile (17) qui va de l'ouverture de sortie (13) à la seconde ouverture de connexion (15), la valve (7) étant disposée
sur les ouvertures de connexion (14, 15) de telle sorte qu'elle relie les deux ouvertures de connexion (14, 15) et contrôle l'écoulement à travers la connexion,
le corps solide (11) a une ouverture de filtre (20) qui croise le premier canal d'huile (16) et dans laquelle un filtre (6) est inséré de manière à filtrer l'huile circulant dans le premier canal d'huile (16), **caractérisé en ce que** l'ouverture de filtre (20) a un filetage interne dans lequel le filtre (6) est vissé.

2. Agencement d'une soupape et d'un bloc de soupape (10) selon la revendication 1, dans lequel le corps solide (11) est en métal.

3. Agencement d'une soupape et d'un bloc de soupape (10) selon l'une des revendications précédentes, dans lequel les canaux d'huile (16, 17) et/ou l'ouverture du filtre (20) sont chacun formés d'un certain nombre d'alésages dans le corps solide (11).

4. Agencement d'une soupape et d'un bloc de soupape (10) selon la revendication 3, dans lequel l'ouverture du filtre (20) rencontre le premier canal d'huile (16) à un angle compris entre 30 et 60 degrés.

5. Agencement d'une soupape et d'un bloc de soupape (10) selon l'une des revendications précédentes, dans lequel l'ouverture d'entrée et/ou l'ouverture de sortie (12, 13) présentent chacune un filetage intérieur dans lequel est vissée une pièce de liaison (18, 19) dans chaque cas.

6. Agencement d'une soupape et d'un bloc de soupape (10) selon l'une des revendications précédentes, dans lequel les ouvertures d'entrée et de sortie (12, 13) sont disposées dans une première surface du corps solide (11), les ouvertures de connexion (14, 15) sont disposées dans une deuxième surface, et les conduits d'huile (16, 17) consistent chacun en deux alésages formés dans la première et la deuxième surface, qui se rejoignent à l'intérieur du corps solide (11).

7. Agencement d'une soupape et d'un bloc de soupape (10) selon la revendication 6, dans lequel la première et la deuxième surface sont perpendiculaires l'une à l'autre.

8. Agencement d'une soupape et d'un bloc de soupape (10) selon l'une des revendications précédentes, dans lequel le corps solide (11) présente une ouverture de regard (21) qui coupe le second canal d'huile (16, 17) et sur laquelle un regard (8) est placé de manière étanche.

9. Agencement d'une soupape et d'un bloc de soupape (10) selon la revendication 8, dans lequel l'ouverture du voyant (21) est formée d'un alésage.

10. Agencement d'une soupape et d'un bloc de soupape (10) selon la revendication 8 ou 9, dans lequel l'ouverture du voyant (21) a un filetage interne dans lequel le voyant (8) est vissé.

11. Agencement d'une soupape et d'un bloc de soupape (10) selon l'une des revendications précédentes, dans lequel la soupape (7) est conçue comme une électrosoupape.
